# EUROPÄISCHE PATENTSCHRIFT

(11) **EP 3 000 653 B1**
(45) Veröffentlichungstag und Bekanntmachung des Hinweises auf die Patenterteilung: **12.04.2017**
(21) Anmeldenummer: 15184629.2
(22) Anmeldetag: 10.09.2015
(51) Int. Cl.: B60N 2/24, B60N 2/30

(54) **KLAPPSITZ FÜR FAHRZEUGE DES ÖFFENTLICHEN PERSONENVERKEHRS**
FOLDING SEAT FOR PUBLIC TRANSPORT VEHICLES
STRAPONTIN POUR VEHICULES DE TRANSPORT EN COMMUN

(30) Priorität: 24.09.2014 DE 102014219258
(43) Veröffentlichungstag der Anmeldung: 30.03.2016
(73) Patentinhaber: Bombardier Transportation GmbH, 10785 Berlin (DE)
(72) Erfinder: NEWESELY, Gerald, 1090 Wien (AT); KRÜGER, Nils, 10407 Berlin (DE); BANK, Steffen, 12205 Berlin (DE)
(74) Vertreter: Patentanwälte Bressel und Partner mbB

(56) Entgegenhaltungen:
- EP-A2- 1 338 463
- WO-A1-2007/141054
- DE-A1- 10 253 186
- US-A- 6 161 896
- US-A1- 2006 103 186

## Beschreibung

Die Erfindung betrifft einen Klappsitz (Siehe WO-A-2007/141054) Fahrzeuge des öffentlichen Personenverkehrs mit einem Rückenlehnen-Teil zum Anlehnen des Rückens einer Person, die in einem heruntergeklappten Zustand des Klappsitzes auf dem Klappsitz sitzt, und mit einem Sitz-Teil, auf dem die Person in dem heruntergeklappten Zustand sitzt, wobei der Sitz-Teil aus dem heruntergeklappten Zustand in einen hochgeklappten Zustand des Klappsitzes bewegbar ist. Die Erfindung betrifft ferner ein Verfahren zum Betreiben eines solchen Klappsitzes und ein Verfahren zum Herstellen eines solchen Klappsitzes.

Derartige Klappsitze werden vor allem in Schienenfahrzeugen, wie Straßenbahnen, S-Bahnen und Nahverkehrszügen, verwendet, um bei geringerer Fahrgastzahl zusätzliche Sitze bereitstellen zu können. Bei hoher Fahrgastzahl befindet sich dagegen üblicherweise der Sitz-Teil in einer eingeklappten (insbesondere hochgeklappten) Stellung, sodass die sonst von einem sitzenden Fahrgast vereinnahmte Bodenfläche für andere Nutzungen zur Verfügung steht, insbesondere für stehende Fahrgäste oder als sogenannte Multifunktionsfläche, z.B. zum Abstellen von Kinderwagen, Rollstühlen, Rollatoren, Fahrrädern oder Gepäck. Darüber hinaus können spezielle Klappsitze im eingeklappten Zustand als Steh-Sitze oder Anlehnhilfen genutzt werden.

Im hochgeklappten Zustand kann die obere Oberfläche des Rückenlehnen-Teils und/oder des hochgeklappten Sitz-Teils als Ablagefläche genutzt werden. Dabei können jedoch kleinere Gegenstände, Schmutz und insbesondere Flüssigkeiten (z.B. aus abgelegten, nicht vollständig entleerten Bierdosen) in Kontakt mit denjenigen Oberflächen kommen, an die sich im heruntergeklappten Zustand ein Fahrgast anlehnen kann oder auf die sich der Fahrgast setzen kann. Diese Oberflächen sind relativ schmutzempfindlich und schwierig zu reinigen, wenn sie für den sitzenden Fahrgast komfortabel ausgestaltet sind. Z.B. sind sie gepolstert und mit Stoff überzogen. Eine Verschmutzung der genannten Flächen führt dazu, dass der Klappsitz bei Bedarf nicht oder nicht in zufriedenstellender Weise als Sitz zur Verfügung steht oder dass er zunächst gereinigt werden muss. Kleinere Gegenstände können in den Raum zwischen dem Rückenlehnen-Teil und dem hochgeklappten Sitz-Teil hineinfallen. Wenn der Sitz-Teil in dem hochgeklappten Zustand arretiert ist, kann der kleine Gegenstand unter Umständen nur unter Schwierigkeiten oder gar nicht wieder entnommen werden, bevor die Arretierung aufgehoben ist. Wenn der hochgeklappte Sitz-Teil nicht arretiert ist, kommt es unter Umständen zu einem unerwünschten Herunterklappen des Sitz-Teils. Wenn für das Herunterklappen des Sitz-Teils Spezialwerkzeug, ein Schlüssel oder eine sonstige Aktion (z.B. eine ferngesteuerte Entriegelung oder Betätigung) des Personals erforderlich ist, wird für das Herausnehmen eines in den Zwischenraum zwischen dem Rücklehnen-Teil und dem Sitz-Teil hineingefallenen Gegenstandes Zeit benötigt.

Es ist eine Aufgabe der vorliegenden Erfindung, einen Klappsitz der eingangs genannten Art anzugeben, der in dem hochgeklappten Zustand vor Verschmutzung geschützt ist und das Hineinfallen von Gegenständen verhindert. Weitere Aufgaben der Erfindung bestehen darin, ein Verfahren zum Betreiben eines derartigen Klappsitzes und ein Verfahren zum Herstellen eines derartigen Klappsitzes anzugeben, mit denen der genannte Erfolg erzielbar ist.

Gemäß einem Lösungsgedanken der vorliegenden Erfindung ist/wird eine Abdeckung an dem Sitz-Teil angebracht, die relativ zu dem Sitz-Teil beweglich ist. In dem hochgeklappten Zustand des Klappsitzes ist die Abdeckung über einem oberen Ende des Rückenlehnen-Teils angeordnet und deckt den Klappsitz oben ab. Beim Betreiben (insbesondere beim Betätigen) des Sitzes (insbesondere um den Sitz als Steh-Sitz oder Anlehnhilfe nutzen zu können) wird die Abdeckung derart relativ zu dem Sitz-Teil bewegt, dass die Abdeckung in dem hochgeklappten Zustand des Klappsitzes über dem oberen Ende des Rücklehnen-Teils angeordnet wird und den Klappsitz oben abdeckt. Bei der Herstellung des Klappsitzes wird eine Abdeckung derart an dem Sitz-Teil angebracht, dass sie relativ zu dem Sitz-Teil beweglich ist und dadurch in eine Relativposition zu dem Sitz-Teil bringbar ist, die sie in dem hochgeklappten Zustand des Klappsitzes einnimmt, wobei die Abdeckung in der Relativposition und in dem hochgeklappten Zustand des Klappsitzes über einem oberen Ende des Rückenlehnen-Teils angeordnet ist und den Klappsitz oben abdeckt.

Die Abdeckung verhindert, dass insbesondere Flüssigkeiten und Schmutz, aber auch kleinere Gegenstände in dem hochgeklappten Zustand an die Oberfläche des Rückenlehnen-Teils gelangen können, an die sich eine auf dem hochgeklappten Klappsitz sitzende Person mit ihrem Rücken anlehnen kann. Auch die Sitzfläche eines hochgeklappten Sitz-Teils wird von der Abdeckung geschützt. Da die Abdeckung an dem Sitz-Teil angebracht ist/wird, steht sie immer dafür zur Verfügung, als Abdeckung gebraucht zu werden. Es ist daher nicht erforderlich, die Abdeckung separat aufzubewahren, wenn der Klappsitz in dem heruntergeklappten Zustand ist, und beim Herstellen des hochgeklappten Zustandes die Abdeckung herbeizuholen.

Wenn in dieser Beschreibung von dem hochgeklappten Zustand oder dem heruntergeklappten Zustand die Rede ist ohne Angabe, auf welchen Gegenstand sich dies bezieht, dann bezieht sich dies auf den gesamten Klappsitz, das heißt in dem hochgeklappten Zustand kann sich im Gegensatz zu dem heruntergeklappten Zustand keine Person auf den Sitz-Teil des Klappsitzes setzen und dabei ihren Rücken an den Rückenlehnen-Teil anlehnen.

Bezogen auf den heruntergeklappten Zustand ist/wird die Abdeckung vorzugsweise auf der Unterseite des Sitz-Teils mit diesem beweglich verbunden. Bei eingeklapptem (insbesondere bei hochgeklapptem) Sitz-Teil, wenn die Sitz-Fläche des Sitz-Teils und die Rückenlehnen-Fläche des Rückenlehnen-Teils einander zugewandt sind und die Abdeckung den Klappsitz oben abdeckt, überspannt die Abdeckung daher ausgehend von der nun vorwärts gerichteten Unterseite des Sitz-Teils das obere Ende des Klappsitzes. Insbesondere verläuft sie dabei von dem Sitz-Teil bis zu dem hinteren Rand des oberen Endes des Rückenlehnen-Teils oder sogar über den hinteren Rand hinaus, sodass der gesamte obere Bereich des Klappsitzes gut geschützt ist.

Vorteilhafterweise deckt die Abdeckung im hochgeklappten Zustand den höchstliegenden Bereich des Rückenlehnen-Teils ab, und zwar vorzugsweise bis zu dessen Hinterseite. Auf diese Weise wird verhindert, dass Flüssigkeit oder Schmutz aufgrund der Schwerkraft von oben zwischen den Rückenlehnen-Teil und den Sitz-Teil gelangen kann. Alternativ oder zusätzlich erstreckt sich die Abdeckung in dem hochgeklappten Zustand des Klappsitzes über die gesamte Breite des oberen Endes des Rückenlehnen-Teils, sodass der Schutz über die gesamte Breite besteht. Die Breite wird in horizontaler Richtung quer zur Längsrichtung des Klappsitzes gemessen. Die Längsrichtung ist durch die Richtung definiert, in die sich in dem heruntergeklappten Zustand die Oberschenkel einer gerade auf dem Klappsitz sitzenden Person erstrecken, die sich an die Rückenlehne anlehnt.

Vorzugsweise ist die im hochgeklappten Zustand des Klappsitzes nach oben weisende Oberfläche der Abdeckung konkav gekrümmt in ihrem Verlauf von dem Sitz-Teil zu dem höchstliegenden Bereich des Rückenlehnen-Teils und über diesen höchstliegenden Bereich hinweg, wobei der höchste Bereich der Abdeckung über dem höchstliegenden Bereich des Rückenlehnen-Teils liegt und die obere Oberfläche der Abdeckung in ihrem Verlauf von dem Sitz-Teil über den höchstliegenden Bereich des Rückenlehnen-Teils hinweg wieder abfällt, vorzugsweise bis über den hinteren Rand des oberen Endes des Rückenlehnen-Teils oder sogar über den hinteren Rand hinaus. In diesen Fällen ist der Bereich zwischen der Vorderseite des Rückenlehnen-Teils und der nach oben geklappten Oberseite des Sitz-Teils besonders gut gegen Eindringen von Schmutz und Flüssigkeit von oben geschützt.

Insbesondere ist/wird die Abdeckung über einen Bewegungs-Mechanismus mit dem Sitz-Teil verbunden, so dass die Abdeckung relativ zu dem Sitz-Teil beweglich ist. Vorzugsweise weist der Klappsitz eine Arretierungseinrichtung auf, durch die in dem hochgeklappten Zustand, in dem die Abdeckung den Klappsitz oben abdeckt, eine Bewegung der Abdeckung relativ zu dem Sitz-Teil blockierbar ist. Alternativ oder zusätzlich ist durch die Arretierungseinrichtung in dem heruntergeklappten Zustand, in dem die Abdeckung eine andere relative Position zu dem Sitz-Teil einnimmt, eine Bewegung der Abdeckung relativ zu dem Sitz-Teil blockierbar. Ohne Aufhebung der Blockade kann die Abdeckung daher nicht relativ zu dem Sitz-Teil bewegt werden. In dem hochgeklappten Zustand und/oder dem heruntergeklappten Zustand kann daher die Abdeckung in ihrer Position relativ zu dem Sitz-Teil arretiert werden. Die Arretierung verhindert eine unbeabsichtigte Bewegung der Abdeckung, insbesondere durch Fahrgäste. Die Blockade kann aufgehoben werden, z.B. vom Personal mit einem Spezialwerkzeug, mit einem Schlüssel und/oder durch Fernbedienung. Ein bevorzugtes Ausführungsbeispiel für die Arretierungseinrichtung wird noch in der Figurenbeschreibung beschrieben. Diese dort beschriebene Art der Arretierung kann nicht nur bei dem in der Figurenbeschreibung beschriebenen Klappsitz vorhanden sein bzw. vorgesehen werden.

Insbesondere kann die Abdeckung als Schutzklappe bezeichnet werden, wenn sie durch eine Klapp-Bewegung in die relative Position zu dem Sitz-Teil bringbar ist, die sie in dem hochgeklappten Zustand hat. Da sie den Klappsitz oben abdeckt, schützt sie ihn vor Einflüssen von oben. In jedem Fall kann die Abdeckung von oben auf sie einwirkende Kräfte aufnehmen und ableiten. Vorzugsweise ist die Abdeckung in dem hochgeklappten Zustand nach unten sowohl von dem Rückenlehnen-Teil als auch von dem Sitz-Teil unterstützt. Dies ermöglicht es Personen, sich in dem hochgeklappten Zustand auf oder an der Abdeckung abzustützen und ihn zum Beispiel als so genannten Steh-Sitz zu nutzen, das heißt nahezu im Stehen über das Gesäß einen Teil der Gewichtskräfte über die Abdeckung auf den Klappsitz auszuüben.

Vorzugsweise ist die Abdeckung an der im hochgeklappten Zustand des Klappsitzes nach oben weisenden Seite mit einem Material versehen, das den Komfort einer sich an der Abdeckung anlehnenden oder sich an der Abdeckung abstützenden Person erhöht. Bevorzugt werden hierfür elastische Materialien, die jedoch leicht von angetrockneten Flüssigkeitsresten zu reinigen sind. Z.B. Schaumstoffe mit zumindest an der Oberfläche geschlossenen Poren sind geeignet. Dagegen besteht der tragende Teil der Abdeckung auch dann vorzugsweise aus einem Duroplast, wenn das Material zur Erhöhung des Komforts nicht vorhanden ist. Insbesondere wenn Material zur Erhöhung des Komforts vorhanden ist, kann der tragende Teil der Abdeckung auch aus Metall bestehen.

Insbesondere befindet sich die Abdeckung in dem heruntergeklappten Zustand des Klappsitzes in einer ersten Relativposition zu dem Sitz-Teil und in dem hochgeklappten Zustand des Klappsitzes in einer zweiten Relativposition zu dem Sitz-Teil. Wenn der Klappsitz von dem heruntergeklappten Zustand in den hochgeklappten Zustand gebracht wird, wird die Abdeckung von der ersten Relativposition in die zweite Relativposition bewegt. In der ersten Relativposition kann die Abdeckung so angeordnet und/oder ausgerichtet sein, dass eine auf dem Klappsitz sitzende Person größeren Sitzkomfort hat, als es bei der zweiten Relativposition der Fall wäre.

Insbesondere kann aus dem heruntergeklappten Zustand zunächst der Sitz-Teil relativ zu dem Rückenlehnen-Teil bewegt werden und dann die Abdeckung von der ersten Relativposition in die zweite Relativposition bewegt werden, so dass der hochgeklappte Zustand erreicht wird. Wenn der Klappsitz wieder in den heruntergeklappten Zustand gebracht wird, kann in umgekehrter Reihenfolge vorgegangen werden, das heißt zunächst wird die Abdeckung bewegt. Alternativ kann die Bewegung der Abdeckung relativ zu dem Sitz-Teil ganz oder teilweise während und/oder nach der Bewegung des Sitz-Teils relativ zu dem Rückenlehnen-Teil stattfinden oder ausgeführt werden. Wenn die Bewegungen nacheinander ausgeführt werden, kann dies die Bedienung erleichtern, insbesondere falls wie in dieser Beschreibung beschrieben zumindest eine der Bewegungen blockierbar ist.

Vorzugsweise ist/wird die Abdeckung über eine Drehvorrichtung an dem Sitz-Teil angebracht, wobei die Drehvorrichtung eine relativ zu dem Sitz-Teil ortsfeste erste (insbesondere horizontal verlaufende) Drehachse aufweist, um die die Abdeckung relativ zu dem Sitz-Teil drehbar ist, und wobei die Abdeckung um die erste Drehachse in eine Relativposition zu dem Sitz-Teil drehbar ist, die sie in dem hochgeklappten Zustand einnimmt und in der sie den Klappsitz oben abdeckt.

Bevorzugtermaßen ist/wird die Abdeckung umgekehrt rinnenförmig mit einem Innenraum ausgestaltet, in den im hochgeklappten Zustand von unten ein oberer Endbereich des Rückenlehnen-Teils hineinragt. Vorzugsweise ragt auch ein in dem hochgeklappten Zustand obenliegender Endbereich des Sitz-Teils in den Innenraum hinein. Im ausgeklappten Zustand bildet dieser obenliegende Endbereich die Vorderkante des Sitzes, meist im Bereich der Kniekehle einer darauf sitzenden Person.

Um den Sitzkomfort im Bereich der Vorderkante des Sitzes nicht nur im Fall der umgekehrt rinnenförmigen Ausgestaltung der Abdeckung zu erhöhen, sondern auch bei anderen Ausgestaltungen der Abdeckung, befindet sich der Massenschwerpunkt der Abdeckung im heruntergeklappten Zustand des Klappsitzes vorzugsweise weiter weg von der Vorderkante als im hochgeklappten Zustand des Klappsitzes. Optional kann die Abdeckung im heruntergeklappten Zustand des Klappsitzes eine Lehne für die Unterschenkel einer auf dem Klappsitz sitzenden Person bilden. Bevorzugt wird jedoch, dass die Abdeckung in dem ausgeklappten Zustand des Klappsitzes sich entgegen der Längsrichtung von der Vorderkante des Sitz-Teils wegerstreckt, und zwar ausgehend von dem Bereich, in dem die Abdeckung beweglich mit dem Sitz-Teil verbunden ist. Vorzugsweise ist dieser Verbindungsbereich von der Vorderkante des Klapp-Sitzes beabstandet. Z.B. beträgt der Abstand im heruntergeklappten Zustand des Klappsitzes mehr als 1 cm, insbesondere mehr als 2 cm, vorzugsweise mehr als 5 cm. In einer besonders bevorzugten Ausgestaltung ist an der Unterseite des Sitz-Teils ein Aufnahmeraum, insbesondere eine Aussparung, vorhanden, in den die Abdeckung zur Herstellung des heruntergeklappten Zustandes des Klappsitzes eingebracht wird. Wenn, wie bevorzugt, die Abdeckung im hochgeklappten Zustand des Klappsitzes an ihrer nach oben weisenden Seite konkav in ihrem Verlauf von dem Sitz-Teil zu dem Rückenlehnen-Teil gekrümmt ist, ist die Aussparung vorzugsweise entsprechend gekrümmt, sodass sie die Abdeckung in dem heruntergeklappten Zustand des Klappsitzes ganz oder teilweise aufnimmt.

Vorzugsweise weist die Abdeckung einen in dem hochgeklappten Zustand seitlich nach unten ragenden Vorsprung auf, wobei weiterhin bevorzugt wird, dass auf beiden Seiten in der Breitenrichtung jeweils ein solcher Vorsprung vorhanden ist / vorgesehen wird. Der Vorsprung deckt den Zwischenraum zwischen den oberen Endbereichen des Rückenlehnen-Teils und des Sitz-Teils im hochgeklappten Zustand des Klappsitzes seitlich ab und erhöht somit den Schutz gegen eindringenden Schutz und eindringende Flüssigkeiten sowie gegen ein Eintreten von kleineren Gegenständen. Der Vorsprung kann auch als Griffteil benutzt werden, das eine Bedienperson greift, wenn sie die Abdeckung relativ zu dem Sitz-Teil bewegt und/oder wenn sie die optional vorhandene Arretierungseinrichtung betätigt. Alternativ oder zusätzlich zu dem seitlichen Vorsprung können jedoch auch andere Bereiche der Abdeckung als Griffteil ausgestaltet sein.

Im Folgenden werden Ausführungsbeispiele der Erfindung unter Bezugnahme auf die beigefügte Zeichnung beschrieben. Die einzelnen Figuren der Zeichnung zeigen:
- Fig. 1: einen Klappsitz im hochgeklappten Zustand,
- Fig. 2: eine Abdeckung des in Fig. 1 gezeigten Klappsitzes,
- Fig. 3: einen mittleren und vorderen Bereich eines Sitz-Teils des Klappsitzes aus Fig. 1, wobei die Abdeckung sich relativ zu dem Sitz-Teil in der Relativposition befindet, die sie im heruntergeklappten Zustand des Klappsitzes einnimmt,
- Fig. 4: eine Seitenansicht des in Fig. 1 dargestellten Klappsitzes, wobei ein hinterer Bereich des Sitz-Teils im heruntergeklappten Zustand und ein mittlerer und vorderer Bereich des Sitz-Teils im hochgeklappten Zustand dargestellt ist,
- Fig. 5: einen Rückenlehnen-Teil des in Fig. 1 dargestellten Klappsitzes,
- Fig. 6: einen Sitz-Teil eines Klappsitzes ähnlich dem Sitz-Teil des in Fig. 1 dargestellten Klappsitzes, wobei jedoch eine andere Abdeckung beweglich an dem Sitz-Teil angebracht ist und wobei als Explosionsdarstellung die Abdeckung in zwei verschiedenen Relativpositionen zu dem Sitz-Teil dargestellt ist, die dem hochgeklappten und dem heruntergeklappten Zustand des Klappsitzes entsprechen,
- Fig. 7: einen Rückenlehnen-Teil und eine Abdeckung eines Klappsitzes, wobei im Unterschied zu dem in Fig. 1 dargestellten Klappsitz die Abdeckung über eine Arretierungseinrichtung im hochgeklappten Zustand des Klappsitzes an dem Rückenlehnen-Teil arretierbar ist,
- Fig. 8: einen gegenüber dem in Fig. 1 dargestellten Klappsitz modifizierten Klappsitz, bei dem der Sitz-Teil in dem heruntergeklappten Zustand an dem in Fig. 8 nur teilweise dargestellten Rückenlehnen-Teil arretierbar ist und wobei die Abdeckung in ihrer Relativposition zu dem Sitz-Teil, die sie in dem eingeklappten Zustand des Klappsitzes einnimmt, arretierbar ist, und
- Fig. 9: den in Fig. 8 dargestellten Klappsitz in seinem heruntergeklappten Zustand, wobei die Abdeckung nicht dargestellt ist und der Rückenlehnen-Teil nur in seinem unteren Bereich dargestellt ist.

In den Figuren werden gleiche Teile und Merkmale auch bei verschiedenen Ausführungsformen von Klappsitzen mit denselben Bezugszeichen bezeichnet.

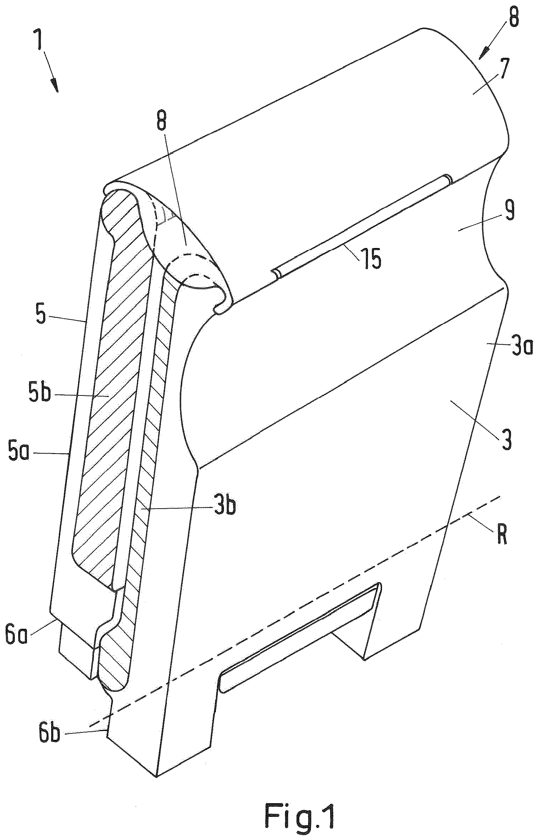

Der in Fig. 1 dargestellte Klappsitz 1 weist einen Sitz-Teil 3 und einen Rückenlehnen-Teil 5 auf. Ferner ist beweglich an dem Sitz-Teil 3 eine Abdeckung 7 angeordnet. In dem dargestellten hochgeklappten Zustand des Klappsitzes 1 deckt die Abdeckung 7 die oberen Endbereiche des Sitz-Teils 3 und des Rückenlehnen-Teils 5 vollständig ab. Sie ist dabei an ihrer Oberseite konkav gekrümmt in ihrem Verlauf von der nach oben geklappten Unterseite des Sitz-Teils 3 zu der Rückseite des Rückenlehnen-Teils 5. Die Abdeckung 7 erstreckt sich von der Unterseite des Sitz-Teils 3 über den höchstliegenden Bereich des Rückenlehnen-Teils 5 hinweg und ist in ihrem weiteren Verlauf zu der Rückseite des Rückenlehnen-Teils 5 nach unten gekrümmt. Die Abdeckung 7 bietet somit einen Schutz gegen Schmutz, Gegenstände und vor allem Flüssigkeiten, die andernfalls in den Zwischenraum zwischen dem Rückenlehnen-Teil 5 und dem Sitz-Teil 3 gelangen könnten. In dem Ausführungsbeispiel weist der Sitz-Teil 3 eine Trägerschale 3a und eine davon getragene Polsterung 3b auf. Der Rückenlehnen-Teil 5 weist ebenfalls eine Trägerschale 5a und eine davon getragene Polsterung 5b auf. In dem in Fig. 1 dargestellten eingeklappten Zustand sind die Oberflächen der Polsterungen 3b, 5b einander zugewandt. Diese Polsterungen 3b, 5b sind besonders schmutzempfindlich und schwierig von Flüssigkeitsresten zu reinigen. Die Polster 3b, 5b sind insbesondere aus einem elastischen Material und mit einem Stoff bezogen.

Fig. 1 zeigt eine spezielle Variante der Abdeckung 7, nämlich mit sich seitlich nach unten erstreckenden Vorsprüngen 8, wobei der rechts oben in Fig. 1 liegende Vorsprung 8 in der Darstellung nicht erkennbar ist, weil er sich in Blickrichtung hinter der Abdeckung 7 befindet. Die Vorsprünge 8 können als Griffe zum Handhaben einer Relativbewegung der Abdeckung 7 relativ zu dem Sitz-Teil 3 genutzt werden. Außerdem decken sie den oberen Endbereich des Zwischenraums zwischen den Polstern 3b, 5b seitlich ab.

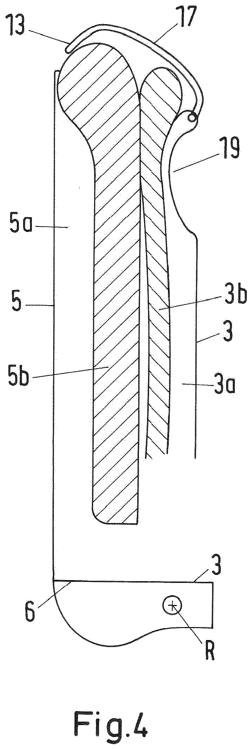

Jeweils unten an dem Sitz-Teil 3 und dem Rückenlehnen-Teil 5 befindet sich eine Anschlagkante 6a, 6b. Wie z.B. aus der Seitenansicht in Fig. 4 unten erkennbar ist, schlagen die Anschlagkanten 6a, 6b im heruntergeklappten Zustand des Klappsitzes aneinander an und bilden eine gemeinsame Anschlagfläche 6.

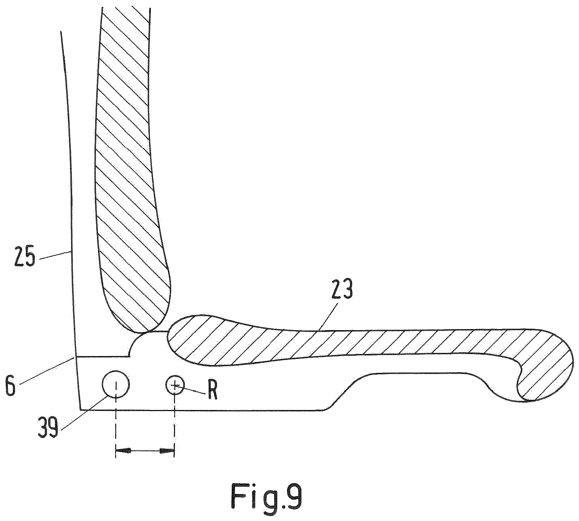

Wie Fig. 1 zeigt, befindet sich im oberen Bereich der hochgeklappten Unterseite des Sitz-Teils 3 befindet sich ein Aufnahmeraum 9 zum Aufnehmen der Abdeckung 7 im heruntergeklappten Zustand des Klappsitzes 1. Da die Abdeckung 7 als Schutzklappe ausgeführt ist, wird sie in den Aufnahmeraum 9 eingeklappt, um den Klappsitz 1 insgesamt in seinen heruntergeklappten Zustand zu bringen. Der heruntergeklappte Zustand eines anderen, gegenüber dem Klappsitz 1 bezüglich einer zusätzlichen Arretierungseinrichtung modifizierten Klappsitzes ist in der Seitenansicht von Fig. 9 dargestellt.

Wie die verschiedenen Varianten von Klappsitzen, die in den Figuren dargestellt sind, zeigen, wird der Sitz-Teil des Klappsitzes ungefähr um einen Drehwinkel von 90° um eine Drehachse gedreht, die in Fig. 1, Fig. 4, Fig. 5 und Fig. 9 mit R bezeichnet ist. Allgemeiner formuliert kann der Drehwinkel des Sitz-Teils z.B. im Bereich von 80° bis 100° liegen. Die Erfindung ist jedoch nicht darauf beschränkt, dass der Sitz-Teil relativ zu dem Rückenlehnen-Teil um eine Drehachse gedreht werden muss, um den Klappsitz vom hochgeklappten Zustand in den heruntergeklappten Zustand und umgekehrt zu bringen. Andere Bewegungsmechaniken, wie z.B. Kulissenführungen, sind bekannt und können ebenfalls bei dem erfindungsgemäßen Klappsitz verwendet werden.

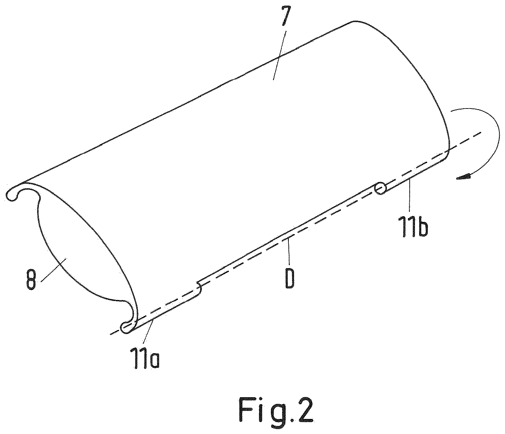

Fig. 2 zeigt die Abdeckung des Klappsitzes 1. Durch eine gestrichelte Linie ist die Drehachse D dargestellt, um die die Abdeckung 7 relativ zu dem in Fig. 2 nicht dargestellten Sitz-Teil 3 drehbar ist. Die Drehvorrichtung ist als Scharnier ausgestaltet, wobei zwei Scharnierteile 11a, 11b in einem Abstand zueinander an den einander gegenüberliegenden Außenbereichen der Abdeckung 7 ausgebildet sind und wobei ein mittlerer Scharnierbereich 15 an dem Sitz-Teil 3 ausgebildet ist.

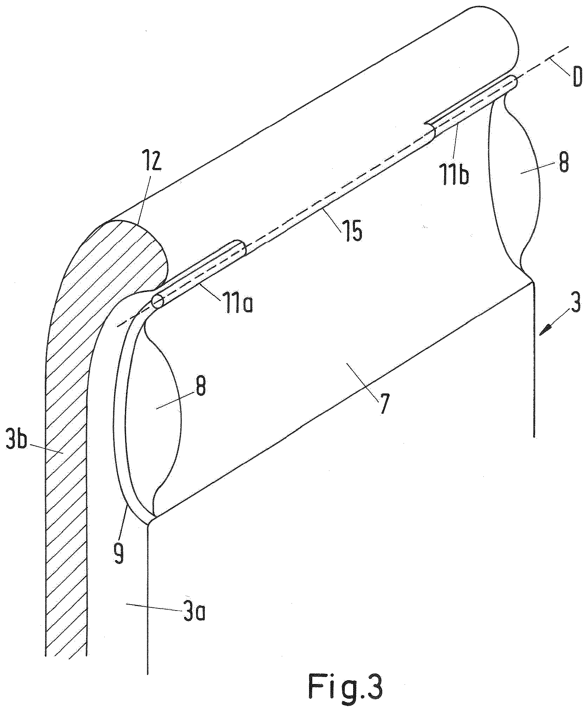

Fig. 3 zeigt die Relativposition bzw. Drehstellung der Abdeckung 7 relativ zu dem Sitz-Teil 3, die die Abdeckung 7 in dem heruntergeklappten Zustand des Klappsitzes einnimmt, wobei Fig. 3 den Sitz-Teil 3 noch in der hochgeklappten Position zeigt. Dies veranschaulicht, dass aus dem hochgeklappten Zustand des Klappsitzes zunächst die Abdeckung in ihre Relativposition zu dem Sitz-Teil 3 gebracht werden kann, die sie in dem heruntergeklappten Zustand des Klappsitzes einnimmt, und anschließend der Sitz-Teil 3 relativ zu dem Rückenlehnen-Teil 5 bewegt wird, um den Klappsitz in den heruntergeklappten Zustand zu bringen.

Die verschiedenen Varianten der Abdeckung, die in den Figuren dargestellt sind, werden mittels einer Drehvorrichtung um eine Drehachse gedreht, deren Position relativ zu dem Sitz-Teil und relativ zu der Abdeckung ortsfest ist. Die Drehvorrichtung erlaubt daher lediglich eine Drehbewegung der Abdeckung relativ zu dem Sitz-Teil. Die Erfindung ist jedoch nicht darauf beschränkt. Vielmehr kann bei anderen Ausgestaltungen eines erfindungsgemäßen Klappsitzes die Abdeckung auf andere Weise relativ zu dem Sitz-Teil bewegt werden, um den Klappsitz von dem hochgeklappten in den heruntergeklappten Zustand zu bringen und umgekehrt.

Wie Fig. 3 zeigt, ist der Aufnahmeraum 9 vorzugsweise so geformt, dass er die Abdeckung 7 ganz oder teilweise aufnimmt. Insbesondere ist der Aufnahmeraum derart (negativ) geformt, dass die Oberfläche der (positiv) geformten Abdeckung, welche im hochgeklappten Zustand des Klappsitzes nach oben weist, an der Oberfläche des Aufnahmeraums 9 vollflächig anliegt oder vollflächig einen etwa konstanten geringen Abstand (z.B. wenige zehntel Millimeter oder wenige Millimeter) hat. Die genannte Oberfläche der Abdeckung kann zur Steigerung des Komforts von daran anlehnenden Personen durch ein elastisches Material (z.B. Schaumstoff) und/oder weiches Material gebildet sein. Alternativ kann zumindest ein Teil der oberen Oberfläche der Abdeckung so ausgestaltet sein und insbesondere ein umlaufender Randbereich der oberen Oberfläche durch härteres Material als in dem Komfortbereich gebildet sein.

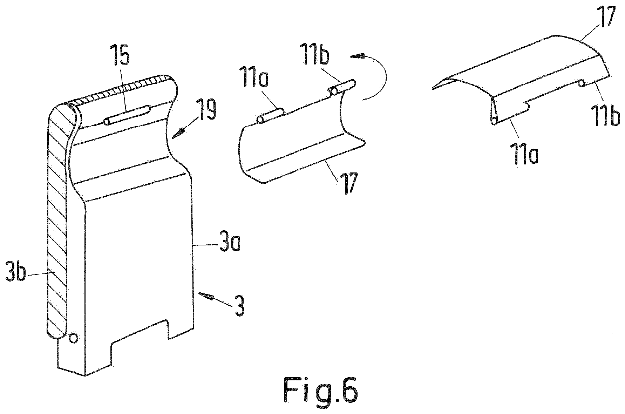

Der Drehwinkel, um den die Abdeckung relativ zu dem Sitz-Teil drehbar ist und auch gedreht wird, um den Klappsitz von dem hochgeklappten in den heruntergeklappten Zustand zu bringen und umgekehrt, ist vorzugsweise größer als der Drehwinkel des Sitz-Teils um die Drehachse R. Vorzugsweise ist der Drehwinkel der Abdeckung größer als 230°, insbesondere größer als 250°. Entsprechende Drehstellungen an den Endpositionen der Drehbewegung der Abdeckung relativ zu dem Sitz-Teil sind aus Fig. 6 erkennbar.

Fig. 4 zeigt in Seitenansicht eine Ausgestaltung eines Klappsitzes mit veränderter Abdeckung 17, die keine seitlich nach unten ragenden Vorsprünge aufweist. Das freie Ende 13 der Abdeckung 17 übergreift aber ebenfalls wie bei dem Klappsitz 1 den höchstliegenden Bereich des Klappsitzes an dem Rückenlehnen-Teil 5. Die Abdeckung 17 ist annähernd in der vollständig geschlossenen Position, in der sie den Klappsitz oben abdeckt. Sie kann aus der gezeigten Position noch weiter im Gegen-Uhrzeigersinn relativ zu dem Sitz-Teil gedreht werden, bis sie an der Trägerschale 5a des Rückenlehnen-Teils anstößt und somit die vollständig geschlossene Position erreicht. Anders als dargestellt kann sie in der vollständig geschlossenen Position das obere Ende der Trägerschale 5a übergreifen, sodass Flüssigkeiten von der oberen Oberfläche der Abdeckung 17 nicht an das Polster 5b gelangen können, sondern an der links in Fig. 4 liegenden Rückseite der Trägerschale 5a nach unten ablaufen.

Aus Fig. 4 ist gut erkennbar, dass die Drehachse R, um die der Sitz-Teil 3 relativ zu dem Rückenlehnen-Teil 5 gedreht werden kann, in einem Abstand vor der gemeinsamen Anschlagfläche 6 liegt.

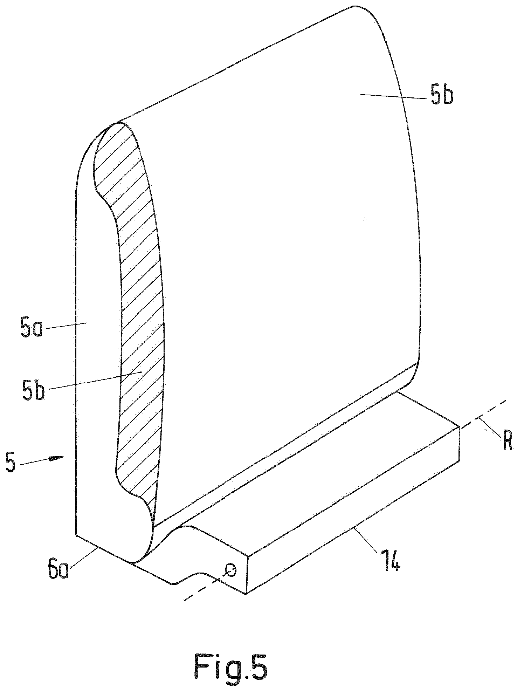

Fig. 5 zeigt den Rückenlehnen-Teil 5 mit einem Montage-Teil 14 zur Montage des Sitz-Teils 3. Der Montage-Teil 14 bildet einen Teil der Drehvorrichtung, die die Drehung des Sitz-Teils relativ zu dem Rückenlehnen-Teil 5 erlaubt.

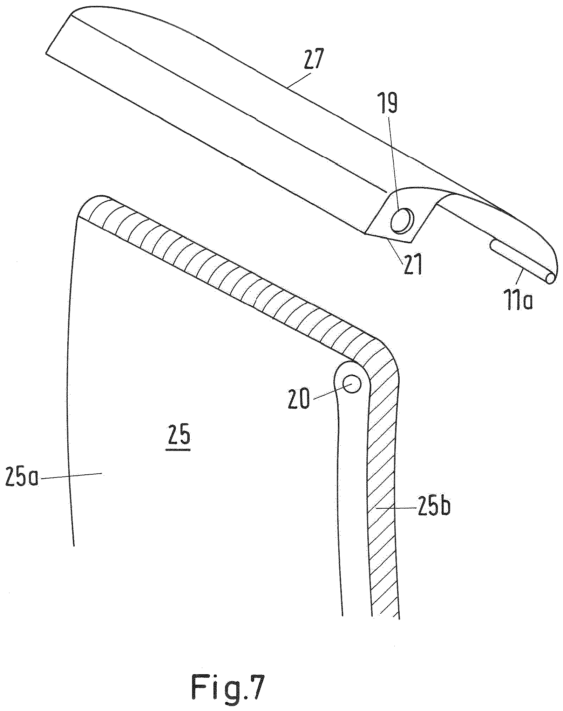

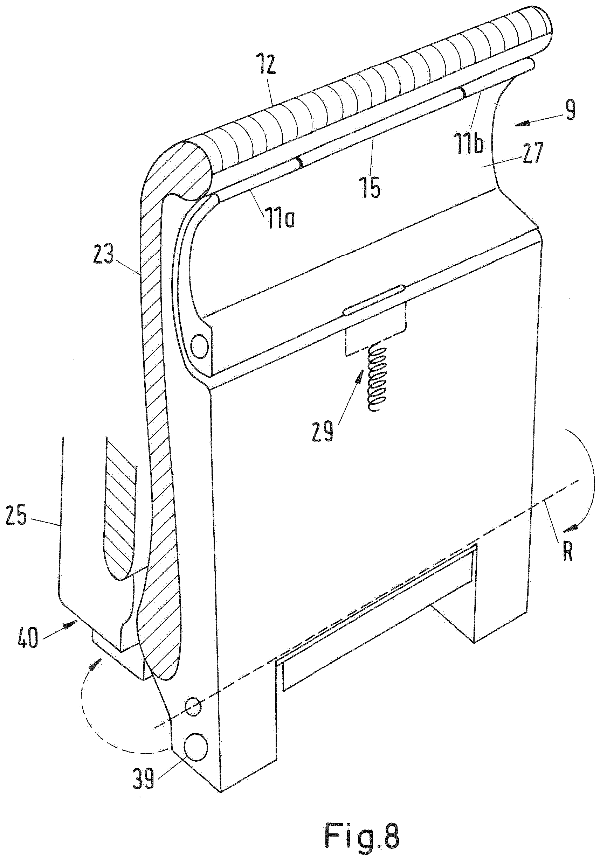

Fig. 7, 8 und 9 zeigen verschiedene Arretierungseinrichtungen zum Arretieren des Klappsitzes in seinem hochgeklappten und seinem heruntergeklappten Zustand. Wünschenswert ist eine Arretierung der Abdeckung (z.B. Schutzklappe 27 in Fig. 7 und 8) in dem eingeklappten Zustand (z.B. Explosionsdarstellung in Fig. 7) und/oder dem heruntergeklappten Zustand (Fig. 8, wobei sich der Sitz-Teil in Fig. 8 noch in dem hochgeklappten Zustand befindet). Vorzugsweise wird mit der Arretierung der Abdeckung im hochgeklappten Zustand des Klappsitzes nicht nur eine Relativbewegung der Abdeckung relativ zu dem Sitz-Teil blockiert, sondern auch eine Bewegung des Sitz-Teils relativ zu dem Rückenlehnen-Teil. Die Arretierungseinrichtung kann daher insbesondere aus zumindest zwei Teilen bestehen, wobei der eine Teil an dem Rückenlehnen-Teil ausgebildet ist und der andere Teil an der Abdeckung ausgebildet ist. Ferner ist eine Arretierung des Sitz-Teils im heruntergeklappten Zustand wünschenswert, sodass der Sitz-Teil nicht unbeabsichtigt in den hochgeklappten Zustand gelangt. Insbesondere soll es dem Personal vorbehalten bleiben, den heruntergeklappten Zustand in den hochgeklappten Zustand und umgekehrt zu überführen. Bezüglich der Überführung in den hochgeklappten Zustand gilt dies insbesondere deshalb, weil gewährleistet werden soll, dass nicht nur der Sitz-Teil hochgeklappt wird, sondern auch die Abdeckung in ihre schützende Position gebracht werden soll. Von Fahrgästen kann dies nicht erwartet werden.

Wie das Ausführungsbeispiel in Fig. 7 zeigt, weist die Abdeckung 27 an ihrem freien Ende seitlich eine Aussparung 19 auf, die ein Teil der Arretierungseinrichtung ist. Die Aussparung 19 befindet sich in dem Ausführungsbeispiel in einem seitlichen Wandbereich 21 der Abdeckung 27. An der Trägerschale 25a des Rückenlehnen-Teils 25 ist ein beweglicher Vorsprung 20 ausgebildet, der in die Aussparung 19 eingebracht werden kann, wenn die Abdeckung 27 in ihrer Schutzposition ist, in der sie im hochgeklappten Zustand des Klappsitzes dessen oberen Bereich abdeckt. Der Vorsprung 20 ist derart beweglich, dass er in Breitenrichtung, d.h. quer zur Längsrichtung des Sitzes, und z.B. in horizontaler Richtung in die Aussparung 19 eingebracht und wieder daraus herausbewegt werden kann.

Z.B. ist der Vorsprung 20 um eine Drehachse drehbar, die ihn in der Breitenrichtung in seinem mittleren Bereich durchstößt. Vorzugsweise mit einem Spezialwerkzeug, das in Eingriff mit dem Vorsprung 20 gebracht wird, kann der Vorsprung 20 aus dem Rückenlehnen-Teil 25 in die Aussparung 19 hineinbewegt werden und umgekehrt. Z.B. ist es für jede dieser Bewegungen zunächst erforderlich, durch Drehung des Vorsprungs 20 zunächst einen Widerstand zu überwinden, der die Bewegung des Vorsprungs 20 in Richtung der Drehachse ermöglicht. Vorzugsweise ist der Vorsprung 20 in der axialen Richtung vorgespannt, die in die Aussparung 19 hineingerichtet ist. Insbesondere kann es erforderlich sein, dass bei der Drehung des Vorsprungs 20 zum Zweck der Überwindung des Widerstandes eine Kraft entgegen der Vorspannung ausgeübt werden muss, damit die Drehung ausgeführt werden kann. Ferner bevorzugt wird, dass der Vorsprung 20 nur soweit in die Aussparung 19 der Abdeckung 27 eingebracht wird, dass der Vorsprung 20 nicht außenseitig der Abdeckung 27 aus der Aussparung 19 hervorragt. Ferner wird bevorzugt, dass der Vorsprung 20 die Aussparung 19 quer zu seiner Bewegungsrichtung vollständig ausfüllt. Im Fall einer kreisrunden Aussparung 19 hat der Vorsprung 20 daher ebenfalls einen kreisförmigen Außenumfang mit einem geringfügig kleineren Außendurchmesser, sodass ein für die Bewegung ausreichendes Spiel vorhanden ist.

Unten in Fig. 8 und in Fig. 9 ist eine Aussparung 39 im rückwärtigen Bereich des Sitz-Teils 23 dargestellt. Wenn der Sitz-Teil 23 wie durch den gestrichelten gebogenen Pfeil links unten in Fig. 8 dargestellt in die heruntergeklappte Relativposition des Klappsitzes gebracht wird, sodass die in Fig. 9 gezeigte gemeinsame Anschlagfläche 6 des Rückenlehnen-Teils 25 und des Sitz-Teils 23 gebildet wird, ist die Aussparung 39 von der Seite betrachtet vor einem beweglichen Vorsprung 40 an der Seite und im unteren Endbereich des Rückenlehnen-Teils 25 positioniert. Dieser Vorsprung 40 ist insbesondere in der gleichen Weise in die Aussparung 39 einbringbar und daraus herausbewegbar, wie für den Vorsprung 20 in Bezug auf die Aussparung 19 in Fig. 7 beschrieben wurde. Auf diese Weise kann der Sitz-Teil 23 im heruntergeklappten Zustand des Klappsitzes arretiert werden. Aus Fig. 9 ist erkennbar, dass (wie durch einen Doppelpfeil angedeutet) die Aussparung 39 und damit die Arretierungseinrichtung in einem Abstand hinter der Drehachse R positioniert ist, wenn sich der Sitz-Teil in der heruntergeklappten Position befindet.

Der Vorsprung der Arretierungseinrichtung 19, 20 oder 39, 40 kann z.B. als Drehstift ausgeführt sein, wie er z.B. als Riegelverschluss von Southco Inc., USA, angeboten wird.

Eine weitere Arretierungseinrichtung ist in Fig. 8 dargestellt, mit der die Abdeckung 27 in der Relativposition zu dem Sitz-Teil 23 arretierbar ist, die dem heruntergeklappten Zustand des Klappsitzes entspricht. In dem konkreten Ausführungsbeispiel ist ein federbelasteter Riegel 29 vorgesehen, der durch die Feder so vorgespannt ist, dass er die Abdeckung 27 in der in den Aufnahmeraum 9 aufgenommenen Position hält und/oder eine Bewegung der Abdeckung 27 aus dem Aufnahmeraum heraus verhindert. Optional kann die durch den Riegel 29 gebildete Verriegelung gesichert werden, sodass sie nur von dem Personal, z.B. mit einem Spezialwerkzeug oder Schlüssel, entsichert werden kann.

Anders als insbesondere in Fig. 8 dargestellt kann die Abdeckung nicht durch das oben liegende dreiteilige Scharnier 11 a, 11 b, 15 drehbar an dem Sitz-Teil gelagert sein, sondern z.B. an beiden Seiten in der Breitenrichtung an dort angeordneten Seitenbereichen des Sitz-Teils. Eine weitere Möglichkeit stellt eine Bewegungsmechanik dar, die verschiedene bewegliche Teile und insbesondere Hebelelemente aufweist, die bei der Bewegung der Abdeckung relativ zu dem Sitz-Teil mit bewegt werden und die Bewegung führen. Auch wenn dabei keine Drehbewegung der Abdeckung um eine bezüglich des Sitz-Teils ortsfeste Drehachse stattfindet, ändert sich die Orientierung der Abdeckung bei der Bewegung in gleicher Weise wie bei einer reinen Drehbewegung. Die unterschiedlichen Orientierungen ermöglichen es, die Abdeckung in ihre Schutzposition zu bringen, in der sie den Klappsitz oben abdeckt, bzw. wieder in den heruntergeklappten Zustand zu bringen.

Insgesamt ermöglicht es der durch die Abdeckung gebotene Schutz vor Verschmutzung, insbesondere in Kombination mit zumindest einer der Arretierungseinrichtungen, die Verfügbarkeit des Klappsitzes zu steigern und ihn dauerhaft vor Fehlgebrauch und Verschmutzung zu schützen. Unter wirtschaftlichen Gesichtspunkten kann der Klappsitz daher höherwertig und insbesondere mit komfortablerer Polsterung ausgestattet sein, als dies bei üblichen Klappsitzen der Fall ist. Durch den mindestens einen Arretierungsmechanismus bleibt es vorzugsweise dem Personal vorbehalten, den Klappsitz von dem hochgeklappten in den heruntergeklappten Zustand zu bringen und umgekehrt. Insbesondere kann das erwähnte Werkzeug, mit dem die Arretierungseinrichtung betätigt wird, als Schlüssel ausgestaltet sein. Das Werkzeug lässt sich daher als Formschlüssel bezeichnen. Dennoch lässt sich insbesondere nach Entriegelung der zumindest einen Arretierungseinrichtung der Klappsitz mit wenigen Handgriffen in den jeweils anderen Zustand bringen.

Von besonderem Vorteil ist die Abdeckung, wenn zumindest zwei Klappsitze Rücken an Rücken nebeneinander aufgestellt sind/werden, sodass die Sitzrichtungen der beiden Klappsitze einander entgegengesetzt sind. Wenn sich beide Klappsitze in dem hochgeklappten Zustand befinden und jeweils die Abdeckung des Klappsitzes den Klappsitz oben abdeckt und die Abdeckungen dabei aneinander stoßen oder keinen größeren Abstand zueinander haben als die Rückseiten der Rückenlehnen-Teile, dann kann zwar der Zwischenraum zwischen den beiden Klappsitzen verschmutzt werden. Dies beeinträchtigt aber die Benutzung der Klappsitze nach Umbau in den heruntergeklappten Zustand nicht. Zum Umfang der Erfindung gehört daher auch eine Anordnung mit zwei solchen Klappsitzen, die jeweils einer der Ausgestaltungen für einen Klappsitz entsprechen, die in dieser Beschreibung beschrieben wurde. Vorzugsweise sind beide Klappsitze gleich ausgestaltet.

Die Verwendung komfortablerer Klappsitze als bisher verändert auch die Gestaltungsmöglichkeiten bei der Gestaltung des Innenraums von Fahrzeugen für den öffentlichen Personenverkehr. Insbesondere können einige der Sitze, die bisher nicht als Klappsitze ausgeführt werden, nun als komfortable Klappsitze ausgeführt werden. Bei geringer oder mittlerer Fahrgastzahl stehen daher nicht weniger Sitze als bisher zur Verfügung. Bei hoher Fahrgastzahl können aber mehr Stehplätze als bisher geschaffen werden.

## Patentansprüche

1. Klappsitz (1) für Fahrzeuge des öffentlichen Personenverkehrs, aufweisend
- einen Rückenlehnen-Teil (5) zum Anlehnen des Rückens einer Person, die in einem heruntergeklappten Zustand des Klappsitzes (1) auf dem Klappsitz (1) sitzt,
- einen Sitz-Teil (3), auf dem die Person in dem heruntergeklappten Zustand sitzt, wobei der Sitz-Teil (3) aus dem heruntergeklappten Zustand in einen hochgeklappten Zustand des Klappsitzes (1) bewegbar ist,
**gekennzeichnet durch**
- eine Abdeckung (7), die an dem Sitz-Teil (3) angebracht und relativ zu dem Sitz-Teil (3) beweglich ist und die in dem hochgeklappten Zustand des Klappsitzes (1) über einem oberen Ende des Rückenlehnen-Teils (5) angeordnet ist und den Klappsitz (1) oben abdeckt.

2. Klappsitz nach Anspruch 1, wobei die Abdeckung (7) über eine Drehvorrichtung (11a, 11b, 15) an dem Sitz-Teil (3) angebracht ist, wobei die Drehvorrichtung (11a, 11b, 15) eine relativ zu dem Sitz-Teil (3) ortsfeste erste Drehachse (D) aufweist, um die die Abdeckung (7) relativ zu dem Sitz-Teil (3) drehbar ist, und wobei die Abdeckung (7) um die erste Drehachse (D) in eine Relativposition zu dem Sitz-Teil (3) drehbar ist, die sie in dem hochgeklappten Zustand einnimmt und in der sie den Klappsitz (1) oben abdeckt.

3. Klappsitz nach Anspruch 1 oder 2, wobei die Abdeckung (7) umgekehrt rinnenförmig mit einem Innenraum ausgestaltet ist, in den im hochgeklappten Zustand von unten ein oberer Endbereich des Rückenlehnen-Teils (5) hineinragt.

4. Klappsitz nach einem der Ansprüche 1-3, wobei die Abdeckung (7) einen in dem eingeklappten Zustand seitlich nach unten ragenden Vorsprung (8) aufweist.

5. Klappsitz nach einem der Ansprüche 1-4, wobei die Abdeckung (7) über einen Bewegungs-Mechanismus mit dem Sitz-Teil (3) verbunden ist, so dass die Abdeckung (7) relativ zu dem Sitz-Teil (3) beweglich ist, und wobei der Klappsitz eine Arretierungseinrichtung aufweist, durch die in dem hochgeklappten Zustand eine Bewegung der Abdeckung (7) relativ zu dem Sitz-Teil (3) blockierbar ist.

6. Verfahren zum Betreiben eines Klappsitzes (1) für Fahrzeuge des öffentlichen Personenverkehrs, wobei der Klappsitz (1) einen Rückenlehnen-Teil (5) zum Anlehnen des Rückens einer Person, die in einem heruntergeklappten Zustand des Klappsitzes (1) auf dem Klappsitz (1) sitzt, und einen Sitz-Teil (3), auf dem die Person in dem heruntergeklappten Zustand sitzt, aufweist, wobei
- der Sitz-Teil (3) relativ zu dem Rückenlehnen-Teil (5) bewegt wird, um den Klappsitz (1) aus dem heruntergeklappten Zustand in einen hochgeklappten Zustand des Klappsitzes (1) oder aus dem hochgeklappten Zustand in den heruntergeklappten Zustand zu bringen,
**dadurch gekennzeichnet, dass**
- eine Abdeckung (7), die an dem Sitz-Teil (3) angebracht ist, derart relativ zu dem Sitz-Teil (3) bewegt wird, dass die Abdeckung (7) in dem hochgeklappten Zustand des Klappsitzes (1) über einem oberen Ende des Rückenlehnen-Teils (5) angeordnet wird und den Klappsitz (1) oben abdeckt.

7. Verfahren nach Anspruch 6, wobei die Abdeckung (7) um eine relativ zu dem Sitz-Teil (3) ortsfeste erste Drehachse gedreht wird und dadurch in eine Relativposition zu dem Sitz-Teil (3) gebracht wird, die sie in dem hochgeklappten Zustand einnimmt und in der sie den Klappsitz (1) oben abdeckt.

8. Verfahren nach Anspruch 6 oder 7, wobei die Abdeckung (7) in dem hochgeklappten Zustand arretiert wird, sodass eine Bewegung der Abdeckung (7) relativ zu dem Sitz-Teil (3) blockiert ist.

9. Verfahren zum Herstellen eines Klappsitzes (1) für Fahrzeuge des öffentlichen Personenverkehrs, wobei folgende Teile zu dem Klappsitz (1) kombiniert werden:
- ein Rückenlehnen-Teil (5) zum Anlehnen des Rückens einer Person, die in einem heruntergeklappten Zustand des Klappsitzes (1) auf dem Klappsitz (1) sitzt,
- ein Sitz-Teil (3), auf dem die Person in dem heruntergeklappten Zustand sitzt, wobei der Sitz-Teil (3) derart mit dem Rückenlehnenteil kombiniert wird, dass der Sitz-Teil (3) aus dem heruntergeklappten Zustand in einen hochgeklappten Zustand des Klappsitzes (1) bewegbar ist,
**dadurch gekennzeichnet, dass**
- eine Abdeckung (7) derart an dem Sitz-Teil (3) angebracht wird, dass sie relativ zu dem Sitz-Teil (3) beweglich ist und dadurch in eine Relativposition zu dem Sitz-Teil (3) bringbar ist, die sie in dem hochgeklappten Zustand des Klappsitzes (1) einnimmt, wobei die Abdeckung (7) in der Relativposition und in dem hochgeklappten Zustand des Klappsitzes (1) über einem oberen Ende des Rückenlehnen-Teils (5) angeordnet ist und den Klappsitz (1) oben abdeckt.

10. Verfahren zum Herstellen eines Klappsitzes (1) nach Anspruch 9, wobei die Abdeckung (7) über eine Drehvorrichtung (11a, 11 b, 15) an dem Sitz-Teil (3) angebracht wird, wobei die Drehvorrichtung (11a, 11 b, 15) eine relativ zu dem Sitz-Teil (3) ortsfeste erste Drehachse aufweist, um die die Abdeckung (7) relativ zu dem Sitz-Teil (3) drehbar ist, und wobei die Abdeckung (7) um die erste Drehachse in eine Relativposition zu dem Sitz-Teil (3) drehbar ist, die sie in dem eingeklappten Zustand einnimmt und in der sie den Klappsitz (1) oben abdeckt.

## Claims

1. A folding seat (1) for public transport vehicles, said seat comprising
- a backrest part (5) for leaning the back of a person against, which person sits on the folding seat (1) in a folded-down state of the folding seat (1),
- a seat part (3), on which the person sits in the folded-down state, wherein the seat part (3) can be moved from the folded-down state into a folded-up state of the folding seat (1),
**characterised by**
- a cover (7), which is attached to the seat part (3) and which is movable relative to the seat part (3) and which, in the folded-up state of the folding seat (1), is arranged above an upper end of the backrest part (5) and covers the folding seat (1) from above.

2. The folding seat according to claim 1, wherein the cover (7) is attached to the seat part (3) by means of a rotary device (11a, 11b, 15), wherein the rotary device (11a, 11b, 15) has a first axis of rotation (D), which is stationary relative to the seat part (3) and about which the cover (7) is rotatable relative to the seat part (3), and wherein the cover (7) is rotatable about the first axis of rotation (D) into a position relative to the seat part (3) which the cover adopts in the folded-up state and in which the cover covers the folding seat (1) from above.

3. The folding seat according to claim 1 or 2, wherein the cover (7) conversely is formed in a channel-like manner with an interior into which an upper end region of the backrest part (5) protrudes from below in the folded-up state.

4. The folding seat according to any one of claims 1-3, wherein the cover (7) has a laterally downwardly projecting protrusion (8) in the folded-in state.

5. The folding seat according to any one of claims 1-4, wherein the cover (7) is connected to the seat part (3) via a movement mechanism, such that the cover (7) is movable relative to the seat part (3), and wherein the folding seat has a locking arrangement, by means of which a movement of the cover (7) relative to the seat part (3) can be blocked in the folded-up state.

6. A method for operating a folding seat (1) for public transport vehicles, wherein the folding seat (1) has a backrest part (5) for leaning the back of a person against, which person sits on the folding seat (1) in a folded-down state of the folding seat (1), and a seat part (3), on which the person sits in the folded-down state, wherein
- the seat part (3) is moved relative to the backrest part (5) in order to bring the folding seat (1) from the folded-down state into a folded-up state of the folding seat (1) or from the folded-up state into the folded-down state,
**characterised in that**
- a cover (7), which is attached to the seat part (3), is moved relative to the seat part (3) in such a way that the cover (7) in the folded-up state of the folding seat (1) is arranged above an upper end of the backrest part (5) and covers the folding seat (1) from above.

7. The method according to claim 6, wherein the cover (7) is rotated about a first axis of rotation that is stationary relative to the seat part (3) and the cover (7) is thus brought into a position relative to the seat part (3) which the cover adopts in the folded-up state and in which the cover covers the folding seat (1) from above.

8. The method according to claim 6 or 7, wherein the cover (7) is locked in the folded-up state, such that a movement of the cover (7) relative to the seat part (3) is blocked.

9. A method for producing a folding seat (1) for public transport vehicles, wherein the following parts are combined to form the folding seat (1):
- a backrest part (5) for leaning the back of a person against, which person sits on the folding seat (1) in a folded-down state of the folding seat (1),
- a seat part (3), on which the person sits in the folded-down state, wherein the seat part (3) is combined with the backrest part in such a way that the seat part (3) can be moved from the folded-down state into a folded-up state of the folding seat (1),
**characterised in that**
- a cover (7) is attached to the seat part (3) in such a way that said cover is movable relative to the seat part (3) and thus can be brought into a position relative to the seat part (3) which the cover adopts in the folded-up state of the folding seat (1), wherein the cover (7) in the relative position and in the folded-up state of the folding seat (1) is arranged above an upper end of the backrest part (5) and covers the folding seat (1) from above.

10. The method for producing a folding seat (1) according to claim 9, wherein the cover (7) is attached to the seat part (3) by means of a rotary device (11a, 11b, 15), wherein the rotary device (11a, 11b, 15) has a first axis of rotation, which is stationary relative to the seat part (3) and about which the cover (7) is rotatable relative to the seat part (3), and wherein the cover (7) is rotatable about the first axis of rotation into a position relative to the seat part (3) which the cover adopts in the folded-in state and in which the cover covers the folding seat (1) from above.

## Revendications

1. Strapontin (1) pour des véhicules de transport en commun, présentant
- une partie de dossier (5) pour adosser le dos d'une personne qui s'assoit sur le strapontin (1) dans un état rabattu du strapontin (1),
- une partie de siège (3), sur laquelle la personne s'assoit dans l'état rabattu, dans lequel la partie de siège (3) est mobile depuis l'état rabattu jusque dans un état relevé du strapontin (1),
**caractérisé par**
- un recouvrement (7) qui est monté sur la partie de siège (3) et est mobile par rapport à la partie de siège (3) et qui est disposé dans l'état relevé du strapontin (1) au-dessus d'une extrémité supérieure de la partie de dossier (5) et recouvre par le haut le strapontin (1).

2. Strapontin selon la revendication 1, dans lequel le recouvrement (7) est monté au-dessus d'un dispositif de rotation (11a, 11b, 15) sur la partie de siège (3), dans lequel le dispositif de rotation (11a, 11b, 15) présente un premier axe de rotation (D) fixe par rapport à la partie de siège (3), autour duquel le recouvrement (7) peut être tourné par rapport à la partie de siège (3), et dans lequel le recouvrement (7) peut être tourné autour du premier axe de rotation (D) dans une position relative par rapport à la partie de siège (3), qu'il occupe dans l'état relevé et dans laquelle il recouvre par le haut le strapontin (1).

3. Strapontin selon la revendication 1 ou 2, dans lequel le recouvrement (7) est configuré en forme de rigole avec un espace intérieur, dans lequel une zone d'extrémité supérieure de la partie de dossier (5) pénètre par le dessous dans l'état relevé.

4. Strapontin selon l'une quelconque des revendications 1 à 3, dans lequel le recouvrement (7) présente une saillie (8) se dressant latéralement vers le bas dans l'état replié.

5. Strapontin selon l'une quelconque des revendications 1 à 4, dans lequel le recouvrement (7) est relié par un mécanisme de déplacement à la partie de siège (3) de sorte que le recouvrement (7) soit mobile par rapport à la partie de siège (3), et dans lequel le strapontin présente un dispositif d'arrêt, par lequel dans l'état relevé, un mouvement du recouvrement (7) peut être bloqué par rapport à la partie de siège (3).

6. Procédé de fonctionnement d'un strapontin (1) pour des véhicules de transport en commun, dans lequel le strapontin (1) présente une partie de dossier (5) pour adosser le dos d'une personne qui s'assoit sur le strapontin (1) dans un état rabattu du strapontin (1), et une partie de siège (3), sur laquelle la personne s'assoit dans l'état rabattu, dans lequel
- la partie de siège (3) est déplacée par rapport à la partie de dossier (5) afin d'amener le strapontin (1) depuis l'état rabattu dans un état relevé du strapontin (1) ou depuis l'état relevé dans l'état rabattu, **caractérisé en ce que**
- un recouvrement (7), qui est monté sur la partie de siège (3), est déplacé par rapport à la partie de siège (3) de telle manière que le recouvrement (7) soit disposé dans l'état relevé du strapontin (1) au-dessus d'une extrémité supérieure de la partie de dossier (5) et recouvre par le haut le strapontin (1).

7. Procédé selon la revendication 6, dans lequel le recouvrement (7) est tourné autour d'un premier axe de rotation fixe par rapport à la partie de siège (3) et est ainsi amené dans une position relative par rapport à la partie de siège (3) qu'il occupe dans l'état relevé et dans laquelle il recouvre par le haut le strapontin (1).

8. Procédé selon la revendication 6 ou 7, dans lequel le recouvrement (7) est arrêté dans l'état relevé de sorte qu'un mouvement du recouvrement (7) par rapport à la partie de siège (3) soit bloqué.

9. Procédé de fabrication d'un strapontin (1) pour des véhicules de transport en commun, dans lequel les parties suivantes sont combinées pour former le strapontin (1) :
- une partie de dossier (5) pour adosser le dos d'une personne qui s'assoit sur le strapontin (1) dans un état rabattu du strapontin (1),
- une partie de siège (3), sur laquelle la personne s'assoit dans l'état rabattu, dans lequel la partie de siège (3) est combinée à la partie de dossier de telle manière que la partie de siège (3) soit mobile depuis l'état rabattu jusque dans un état relevé du strapontin (1),
**caractérisé en ce que**
- un recouvrement (7) est monté sur la partie de siège (3) de telle manière qu'il soit mobile par rapport à la partie de siège (3) et puisse être ainsi amené dans une position relative par rapport à la partie de siège (3), qu'il occupe dans l'état relevé du strapontin (1), dans lequel le recouvrement (7) est disposé, dans la position relative et dans l'état relevé du strapontin (1), au-dessus d'une extrémité supérieure de la partie de dossier (5) et recouvre par le haut le strapontin (1).

10. Procédé de fabrication d'un strapontin (1) selon la revendication 9, dans lequel le recouvrement (7) est monté au-dessus d'un dispositif de rotation (11a, 11b, 15) sur la partie de siège (3), dans lequel le dispositif de rotation (11a, 11b, 15) présente un premier axe de rotation fixe par rapport à la partie de siège (3), autour duquel le recouvrement (7) peut être tourné par rapport à la partie de siège (3), et dans lequel le recouvrement (7) peut être tourné autour du premier axe de rotation dans une position relative par rapport à la partie de siège (3) qu'il occupe dans l'état replié et dans laquelle il recouvre par le haut le strapontin (1).
